# EUROPÄISCHE PATENTANMELDUNG

(11) **EP 4 571 614 A1**
(43) Veröffentlichungstag der Anmeldung: **18.06.2025**
(21) Anmeldenummer: 24219323.3
(22) Anmeldetag: 12.12.2024
(51) Int. Cl.: G06Q 10/08, G06Q 50/60, B07C 3/00, B25J 9/16

(54) **VERFAHREN ZUM HANDHABEN EINES STÜCKGUTS**

(30) Priorität: 13.12.2023 DE 102023134878
(71) Anmelder: Körber Supply Chain Logistics GmbH, 78467 Konstanz (DE)
(72) Erfinder: Fischer, Marco, 78462 Konstanz (DE); Huber, Richard, 78467 Konstanz (DE); Eisser, Dirk-Udo, 78479 Reichenau (DE); Skrdlant, Rolf-Peter, 88662 Überlingen (DE); Schulze, Oliver, 88662 Überlingen (DE)
(74) Vertreter: Müller Schupfner & Partner Patent- und Rechtsanwaltspartnerschaft mbB (Muc)

(57) **Zusammenfassung**

Verfahren zum Handhaben von zumindest einem Stückgut, umfassend: Bestimmen oder Erlangen von zumindest einer Stückgutinformation (SI) des zumindest einen Stückguts, Zuordnen des zumindest einen Stückguts zu einer Stückgutklasse (SK), wobei die Stückgutklasse (SK) aus einer Datenbank (DB) basierend auf der Stückgutinformation (SI) erlangt wird, Bestimmen von zumindest einem Manipulationsparameter für das zumindest eine Stückgut basierend auf der Stückgutklasse (SK), Handhaben des Stückguts basierend auf dem zumindest einen Manipulationsparameter.

## Beschreibung

Die vorliegende Erfindung betrifft ein Verfahren zum Handhaben von zumindest einem Stückgut. Ferner betrifft die vorliegende Erfindung ein System und eine Verwendung zum Handhaben von zumindest einem Stückgut.

Aus dem Stand der Technik sind verschiedene Verfahren bekannt, um Stückgut mit unterschiedlichen Eigenschaften, beispielsweise Postsendungen, zu handhaben. Unter unterschiedlichen Eigenschaften sind beispielsweise Gewicht, Form, Abmessungen, Verformbarkeit, Härte, Material, Schwerpunkt etc. eines Stückguts zu verstehen. Diese unterschiedlichen Eigenschaften haben zur Folge, dass nicht jedes Stückgut sich gleich mittels einer maschinellen Manipulation bzw. einen maschinellen Vorgang handhaben lässt. Unter einer maschinellen Manipulation ist beispielsweise eine Beschleunigung bzw. Bewegung auf einem Förderband, ein Greifen durch einen Greifer, beispielsweise einen Vakuum-Sauggreifer oder ein Transport durch einen Roboter zu verstehen.

Bei bekannten Verfahren werden diese Eigenschaften der Stückgüter durch standardisierte Parameter dargestellt. Dies kann jedoch zu Fehlern, beispielsweise beim Sortieren oder Greifen bis hin zu Beschädigungen der Stückgüter führen. Beim Auftreten von Fehlern kann es auch notwendig sein, dass manuell von einem Menschen in den Vorgang eingegriffen werden muss.

Daher ist es eine Aufgabe der vorliegenden Erfindung, ein Verfahren bereitzustellen, das eine bessere Handhabung von Stückgütern ermöglicht. Insbesondere ist es Aufgabe der Erfindung, ein Verfahren bereitzustellen, das die unterschiedlichen Eigenschaften von Stückgütern berücksichtigt.

Das Problem wir mit einem Verfahren mit den Merkmalen des Anspruchs 1, mit einem System mit den Merkmalen des Anspruchs 14 und mit einer Verwendung mit den Merkmalen des Anspruchs 15 gelöst. Vorteilhafte Weiterbildungen sind in den abhängigen Ansprüchen definiert.

Ein Aspekt der vorliegenden Erfindung betrifft insbesondere ein Verfahren zum Handhaben von zumindest einem Stückgut, vorzugsweise umfassend:
- Bestimmen oder Erlangen von zumindest einer Stückgutinformation des zumindest einen Stückguts,
- Zuordnen des zumindest einen Stückguts zu einer Stückgutklasse, wobei die Stückgutklasse aus einer Datenbank basierend auf der Stückgutinformation erlangt wird,
- Bestimmen von zumindest einem Manipulationsparameter für das zumindest eine Stückgut basierend auf der Stückgutklasse,
- Handhaben des Stückguts basierend auf dem zumindest einen Manipulationsparameter.

Gegenüber dem bekannten Stand der Technik liefert die vorliegende Erfindung den Vorteil, dass eine bessere Handhabung von Stückgütern möglich ist. Insbesondere wird die Fehlerrate bei der Handhabung von Stückgütern verringert. Das bedeutet, dass beispielsweise bei einem und/oder mehreren Vorgängen, bei denen ein und/oder mehrere Stückgüter, insbesondere Stückgüter mit unterschiedlichen Eigenschaften, manipuliert werden, die Anzahl der Stückgüter, bei denen die Manipulation erfolgreich ist, erhöht wird. Ferner ist durch das vorliegende Verfahren eine schnellere Manipulation von Stückgütern und folglich ein höherer Durchsatz von Stückgütern möglich. Dadurch kann die Effizienz von Prozessen erhöht werden.

Unter dem Begriff Handhaben ist eine Art der Manipulation zu verstehen. Beispielsweise kann darunter eine Richtungsänderung, eine Beschleunigung, ein Greifvorgang, ein Aufnehmen, ein Halten, ein Loslassen, ein Transport und/oder ein Verschieben bzw. Bewegen eines Stückgutes verstanden werden. Insbesondere kann unter dem Begriff Handhaben eine Aktion verstanden werden, die eine translatorische und/oder rotatorische Bewegung des Stückguts umfasst. Handhaben kann ein physisches manipulieren eines Stückguts sein. Das vorliegende Verfahren kann beispielsweise in einem System verwendet werden, das dazu vorgesehen ist, Stückgute zu transportieren und/oder zu sortieren. Beispielsweise kann das Stückgut mittels eines Förderbands bewegt werden. Es ist des Weiteren denkbar, dass das Verfahren in einem System verwendet wird, das Greifer, insbesondere Vakuum-Sauggreifer umfasst, um Stückgüter zu handhaben. Unter einem Stückgut kann ein transportables Gut oder Objekt, insbesondere ein Paket oder Päckchen, verstanden werden. Insbesondere können Poststücke oder Postsendungen unter Stückgüter verstanden werden. Stückgüter können verschiedene Eigenschaften bzw. Beschaffenheiten aufweisen. Das Stückgut kann eine weiche, nachgiebige Beschaffenheit oder eine feste, unnachgiebige Beschaffenheit aufweisen. Ebenso kann die Oberfläche strukturiert oder unstrukturiert sein. Des Weiteren können Stückgüter unterschiedliche Verpackungseigenschaften aufweisen. Ein Stückgut kann im Wesentlichen symmetrisch oder asymmetrisch geformt sein. Des Weiteren können die Stückgüter jeweils unterschiedliche Massen aufweisen. Die Beschaffenheit der handhabbaren Stückgüter in Bezug auf Masse und Größe ist durch das System definiert, welches dazu vorgesehen ist, das erfindungsgemäße Verfahren auszuführen. Unter einem Stückgut kann beispielsweise ein Paket aus einem Kartonmaterial, beispielsweise Pappe, mit oder ohne Inhalt verstanden werden. Alternativ kann ein Stückgut ein Paket oder Päckchen aus einem Folienmaterial sein. Unverpackte Stückgüter, beispielsweise Flaschen oder Ampullen können ebenfalls unter dem Begriff Stückgüter eingeordnet werden. Eine Stückgutklasse kann eine Kategorie für ein Stückgut beschreiben. Mit anderen Worten kann die Stückgutklasse eine Clusterung mehrerer Stückgutinformationen sein. Vorstellbar ist, dass die Stückgutklasse eine Art Schublade ist, in die ähnliche Stückgutinformationen hineinpassen. Eine solche Schublade kann dann indikativ für einen bestimmten Manipulationsparameter sein. Die Stückgutinformation kann auch als Poststückinformation bezeichnet sein. Die Stückgutklasse kann Eigenschaften betreffen, die für die Handhabung des Stückguts relevant sind. Eine Stückgutklasse kann zumindest eine Stückgutinformation umfassen bzw. beinhalten. Vorzugsweise umfasst eine Stückgutklasse mehrere Stückgutinformationen. Eine Stückgutinformation kann beispielsweise eine Geometrie eines Stückguts umfassen. Zusätzlich kann eine Stückgutinformation ein Gewicht des Stückguts umfassen. Aus diesen beiden Stückgutinformationen kann dann ein Stückgut einer Stückgutklasse zugeordnet werden. Es ist denkbar, dass eine Stückgutklasse weitere, insbesondere mehrere, Stückgutinformationen umfasst bzw. beinhaltet. Des Weiteren kann eine Stückgutinformation eine Information in Bezug auf einen Empfänger des Stückguts und/oder auf einen Sender des Stückguts betreffen. Anders gesagt kann eine einzelne Stückgutklasse eine Gruppe von Stückgutinformationen aufweisen. Die Stückgutklasse kann in einer Datenbank hinterlegt sein. Die Datenbank kann auf einem Datenspeichermedium hinterlegt sein. Vorzugsweise ist die Datenbank auf einer Serverstruktur bzw. in einer Cloudsystem hinterlegt und kann über diese abgerufen werden. Alternativ kann die Datenbank auf einem lokalen Datenspeichermedium hinterlegt sein. Die in der Datenbank hinterlegten Stückgutklassen sind vorzugweise änderbar bzw. anpassbar. Es ist insbesondere vorteilhaft, wenn die Datenbank durch neue Stückgutklassen ergänzt werden kann. Der Begriff Manipulationsparameter betrifft Parameter, welche die Handhabung eines Stückguts betreffen. Beispielsweise sind Manipulationsparameter die Parameter, mit denen ein Handhabungssystem, welches die Stückgüter handhaben kann, steuerbar ist. Mit anderen Worten können die Manipulationsparameter indikativ dafür sein wie ein Stückgut handhabbar ist. Beispielsweise kann ein Manipulationsparameter die Geschwindigkeit umfassen, mit der ein Stückgut transportiert wird. Alternativ kann ein Manipulationsparameter einen Ansaugdruck einem Vakuum-Sauggreifer umfassen, der abhängig von der Stückgutklasse des Stückguts, angepasst wird. Alternativ oder zusätzlich können die Manipulationsparameter Koordinaten umfassen, um ein Stückgut an einer bestimmten Position oder Greifpunkt zu greifen. Weitere Manipulationsparameter können die aufzubringende Leistung eines Motors bzw. die angelegte Stromstärke an einem Motor, eine Beschleunigung, ein Schwerpunkt oder ein Winkel sein. Durch eine geeignete Wahl der passenden Manipulationsparameter kann der Erfolg einer Handhabung eines Stückguts vorteilhaft beeinflusst werden. Die Manipulationsparameter können auch als Ausgang der Datenbank bezeichnet werden. Ein Manipulationsparameter kann beispielsweise ein Sollwert für eine Steuerung oder Regelung sein, die dazu konfiguriert ist, das zumindest eine Stückgut zu handhaben. Vorzugsweise kann das Bestimmen des zumindest einen Manipulationsparameter basierend auf einem Wunschergebnis einer auszuführenden Manipulation ausgeführt werden. das Wunschergebnis kann beispielsweise eine Erfolgswahrscheinlichkeit der Manipulation umfassen. Mit anderen Worten kann in die Bestimmung des zumindest einen Manipulationsparameters mit einfließen wie sicher die Manipulation zum Erfolg führen soll. Somit kann für sehr empfindliche Stückgüter eine besonders hohe Erfolgswahrscheinlichkeit gesetzt werden, um Beschädigungen zu vermeiden. Ferner kann das Wunschergebnis beispielsweise indikativ für eine Handhabung von zwei Stückgütern gleichzeitig sein. Entsprechend können die Manipulationsparameter so angepasst werden, dass dies realisiert ist. Ferner kann das Wunschergebnis für eine besonders exakte Handhabung des Stückguts indikativ sein. Dies kann besonders vorteilhaft sein, wenn eine Platzierung des Stückguts im Raum an einer bestimmten Position besonders wichtig ist. Zusätzlich der alternativ kann das Wunschergebnis indikativ für eine Geschwindigkeit der Handhabung des Stückguts sein. Damit kann bestimmt werden, dass das Stückgut besonders langsam oder besonders schnell gehandhabt werden soll. Insgesamt kann mit dem Wunschergebnis weiter Einfluss auf den zumindest einen Manipulationsparameter genommen werden. Dadurch kann das Verfahren besonders gut an individuelle Manipulationsprozesse angepasst sein.

Vorzugsweise ist die Datenbank eine multidimensionale Datenbank, und das Zuordnen des zumindest einen Stückguts zu der Stückgutklasse wird basierend auf zumindest zwei Stückgutinformationen durchgeführt. Vorzugsweise wird das Zuordnen des zumindest einen Stückguts basierend auf zumindest drei Stückgutinformationen durchgeführt. Für eine zielgenaue Handhabung ist es vorteilhaft, wenn möglichst viele Stückgutinformationen über die einzelnen Stückgüter ermittelt werden. Dadurch können Fehlsortieren, Störungen im Stückguttransport oder sogar zu Beschädigungen der Anlage verhindert bzw. vermindert werden. Eine multidimensionale Datenbank (Multidimensional Database (MDB)) kann ein Datenbankkonzept sein, bei dem die Daten in mehreren Dimensionen gespeichert werden. Es beschränkt sich nicht auf zwei Dimensionen, wie eine relationale Datenbank, sondern auf mehrere Dimensionen. In einer multidimensionalen Datenbank kann jeder einzelne Datenwert in einer einzelnen Datenzelle gespeichert sein. Die Datenzellen sind nicht nur in zwei Dimensionen angeordnet, wie bei einer relationalen Datenbank, sondern in einer mehrdimensionalen Matrix oder einem mehrdimensionalen Array. Die Anzahl der Dimensionen einer multidimensionalen Datenbank ergeben sich aus den in der Datenbank gespeicherten Typen von Informationen. Unter einer Information kann hier eine Stückgutinformation verstanden werden. Beispielsweise können von einem oder mehreren Stückgütern die Stückgutinformationen bezüglich Form, Gewicht und Oberflächenbeschaffenheit ermittelt werden. Eine solche multidimensionale Datenbank, die diese Stückgutinformationen berücksichtigt, umfasst demnach drei Dimensionen. Ein drei-dimensionale Datenbank kann beispielsweise als ein Würfel dargestellt werden. Je nach Inhalt der einzelnen Stückgutinformationen kann das Stückgut in eine entsprechende Stückgutklasse eingeordnet werden. Beispielsweise können ein erstes Stückgut und ein zweites Stückgut in Form und Oberflächenbeschaffenheit identisch oder zumindest nahezu identisch sein, jedoch sich im Gewicht zueinander erheblich unterscheiden. Das erste Stückgut wird dann einer anderen Stückgutklasse zugeordnet als das zweite Stückgut. Dadurch ist es möglich, dass die beiden Stückgüter jeweils mit, insbesondere an das Gewicht, angepasste Manipulationsparameter gehandhabt werden können.

Im Gegensatz zu einer multidimensionalen Datenbank arbeitet eine relationale Datenbank zweidimensional mit Tabellen aus Spalten und Reihen, in denen sie die Daten speichert. Der Zugriff auf die Daten erfordert komplexe Verbunde von vielen Tabellen. Die Darstellung und Navigation erfolgen in multidimensionalen Datenbanken gemäß einem intuitiven Arbeitsvorgang. Die Datenanalyse und die Entscheidungsfindung sind bei der multidimensionalen Datenbank somit wesentlich einfacher und effizienter. Multidimensionale Datenbaken sind besonders vorteilhaft für Entscheidungsprozesse bei interaktiven Analysen von großen Datenmengen. Sie können besonders vorteilhaft eingesetzt werden um umfangreiche Datenvolumen direkt für Logistik und/oder für weiterführende Planungen zu nutzen. Mit anderen Worten kann der multi-dimensionalen Datenbank Eingangsdaten (z.B. Stückgutinformationen) zugeführt werden. Daraufhin kann die multi-dimensionalen Datenbank Ausgabedaten (z.B. Stückgutklasse) ausgeben. Die multi-dimensionalen Datenbank hat den Vorteil, dass beispielsweise eine Vielzahl von Stückgutinformationen als Eingangsdaten zur Verfügung gestellt werden können und die multi-dimensionalen Datenbank dennoch alle Stückgutinformationen berücksichtigen kann, um eine Stückgutklasse als Ausgabedaten zu bestimmen. Somit ist es möglich eine sehr große Bandbreite von unterschiedlichen Stückgütern zufriedenstellen klassifizieren zu können. Für die vorliegende Erfindung ist es vorteilhaft, einen multidimensionalen Raum vorzusehen, der Stückgutinformationen und ggf. ein Wunschergebnis als Eingangsdaten aufnehmen kann und zumindest einen Manipulationsparameter aus Ausgabedaten ausgeben kann.

Vorzugsweise werden bei dem Zuordnen mehrere Stückgüter mit gleichen oder ähnlichen Stückgutinformationen derselben Stückgutklasse zugeordnet. Dadurch kann die Anzahl der notwendigen Stückgutklassen in der Datenbank reduziert werden. So kann eine Toleranz bzw. Abweichungen bei den Eigenschaften der Stückgüter, beispielsweise bei der Form, der Masse und/oder der Größe von Stückgütern, berücksichtigt werden. Insbesondere können Stückgutklassen Spannen oder Bereiche von Stückgutinformationen umfassen bzw. abdecken.

Vorzugsweise sind die Manipulationsparameter für alle Stückgüter einer Stückgutklasse identisch. Dadurch kann sichergestellt werden, dass die Stückgüter einer Stückgutklasse immer gleich gehandhabt werden. So können Fehler bei der Handhabung der Stückgüter vermieden bzw. vermindert werden.

Vorzugsweise erfolgt das Bestimmen oder Erlangen von zumindest einer Stückgutinformation des zumindest einen Stückguts zeitlich vor dem Handhaben des Stückguts basierend auf dem zumindest einen Manipulationsparameter. So können die zum Ermitteln der Manipulationsparameter und zur sicheren Handhabung der Stückgüter notwendigen Stückgutinformationen rechtzeitig bereitgestellt werden. Beispielsweise können die Stückgutinformationen mittels Sensoren erlangt oder von einer Datenbank bereitgestellt werden.

Vorzugsweise umfasst die Stückgutinformation zumindest einen Parameter über eine vergangene Manipulation und/oder einen vergangenen Manipulationsversuch desselben Stückguts oder eines ähnlichen Stückguts, insbesondere eines Poststücks. Eine vergangene Manipulation kann beispielsweise dann gegeben sein, wenn ein Stückgut mit bestimmten Eigenschaften bereits zuvor von einer Handhabungsvorrichtung gehandhabt wurde. Diese vorherige Handhabung kann analysiert worden sein und Informationen darüber gespeichert werden. Beispielsweise kann das Handhaben von einer Versandtasche mit einem Sauggreifer analysiert werden und bestimmt werden bei welcher Geschwindigkeit die Versandtasche von dem Sauggreifer abfällt und wann nicht. Diese Information kann dann in der Datenbank gespeichert werden. Wird eine solche oder ähnliche Versandtasche dann erneut bei einer Handhabungsvorrichtung erkannt, können die gespeicherten Informationen abgerufen werden und für die aktuelle Steuerung der Handhabungsvorrichtung genutzt werden. Das gleiche oder ein ähnliches Stückgut kann dabei vorzugsweise der gleichen Stückgutklasse zugeordnet sein. Insbesondere kann der Parameter über einen vergangenen Manipulationsversuch eine Beschleunigung, einen Greifpunkt, einen Vakuum-Druck und/oder einen Druckverlust umfassen.

Vorzugsweise umfasst die Stückgutinformation den Erfolg eines vorangegangen Manipulationsversuchs, insbesondere durch Abgleich von Erwartung und tatsächlichem Ergebnis. Der Erfolg oder Misserfolg einer Manipulation bzw. einer Handhabung wird vorzugsweise Aufgenommen und ggf. in der Datenbank gespeichert. Dadurch können bei Bedarf die Manipulationsparameter angepasst werden. Beispielsweise können die Manipulationsparameter automatisch oder durch menschlichen Eingriff angepasst werden. So kann das Verfahren anpassbar sein. Wenn beispielsweise die vorhandenen Parameter angeben, dass die Handhabung mit bestimmten Manipulationsparametern glücken kann, dies in der Vergangenheit jedoch schonmal fehlgeschlagen ist, kann dies in der Datenbank hinterlegt werden und die Manipulationsparametern können entsprechend angepasst werden. Damit kann das Verfahren auf Basis von "Erfahrung" lernen.

Vorzugsweise umfasst die Stückgutinformation eine Verformung des Stückguts bei einem Handhaben des Stückguts. Beispielsweise kann so detektiert werden, ob das Stückgut beschädigt wurde. Ferner können auf diese Art und Weise weitere Stückgutinformationen mit Blick auf die materielle Beschaffenheit des Stückguts ermittelt werden. Die Verformung des Stückguts kann optisch bestimmt werden, beispielsweise durch einen optischen Sensor. Insbesondere bei flexiblen Verpackungen der Stückgüter kann es zu Verformungen der Stückgüter kommen. So kann es vorkommen, dass beispielsweise ein geplanter Greifpunkt eines Stückguts im unverformten Zustand gut geeignet ist. Kommt es jedoch zu einem Kontakt zwischen Handhabungsvorrichtung und Stückgut, kann sich das Stückgut so verformen, dass der vorher anvisierte Kontaktpunkt nachteilig sein kann. Durch die Information über eine Verformung des Stückguts, kann ein solcher Umstand berücksichtigt werden und der Greifpunkt bzw. die Handhabung des Stückguts darauf angepasst werden.

Vorzugsweise umfasst die Stückgutinformation einen Motorstrom einer Handhabungsvorrichtung bei einem Handhaben des Stückguts. Dadurch kann die zum Handhaben eines Stückguts einer bestimmten Stückgutklasse notwendige Leistung als Manipulationsparameter hinterlegt werden. Ferner kann so auf eine Masse des Stückguts zurückgeschlossen werden. Ferner kann auf einen Schwerpunkt des Stückguts geschlossen werden (in Verbindung mit einem optischen Analysesystem). Damit kann eine tatsächliche Messung von zumindest einer Eigenschaft (d.h. Stückguteigenschaft) des Stückguts durchgeführt werden.

Vorzugsweise umfasst die Stückgutinformation Sensordaten eines Sensors einer Handhabungsvorrichtung bei einem Handhaben des Stückguts. Beispielsweise können die Sensordaten von einem Abstandssensor, einem optischen Sensor und/oder einem Drucksensor bereitgestellt werden. Durch einen Abstandssensor kann die Lage eines Stückgutes, beispielsweise auf einem Förderband oder einem Regal ermittelt und zum Zuordnen des Stückguts zu einer Stückgutklasse bereitgestellt werden. Optische Sensoren, beispielsweise Kamerasensoren oder Lasersensoren eignen sich sowohl zum Detektieren von Stückgütern als auch zum Messen von Abständen. Drucksensoren können Daten in Bezug auf eine notwendige Haltekraft für ein Stückgut bereitstellen.

Vorzugsweise umfassen die Stückgutinformation Absender- und/oder Empfängerinformationen. Das ermöglicht es, die Stückgüter unter Berücksichtigung der Herkunft und des Zielorts einer Stückgutklasse zu zuordnen. Beispielsweise kann der Lagerort, aus dem das Stückgut entnommen wurde, als Senderinformation auf dem Stückgut hinterlegt sein und der Zielort, beispielsweise zum weiterverarbeiten des Stückguts, kann durch die Empfängerinformation auf dem Stückgut hinterlegt sein. Insbesondere kann es sich bei den Stückgütern um Poststücke handeln. Die Empfänger- und Senderinformationen können insbesondere als Strichcode (Barcode) auf dem Stückgut hinterlegt bzw. angeordnet sein. Dadurch können diese einfach abgelesen und zum Zuordnen des Stückguts zu einer entsprechenden Stückgutklasse verwendet werden. Alternativ kann eine bildbasierte Technologie zum Erkennen von Briefen oder Paketen anhand ihrer optischen Eigenschaften vorgesehen sein. Eine solche bildbasierte Technologie, auch Fingerprint-Technologie genannt, ist nicht auf Etiketten und Barcodes angewiesen.

Vorzugsweise umfassen die Stückgutinformation Datenbankinformationen und/oder Einlieferungsbelege über Inhalt oder Gewicht des Stückguts. So können bereits Stückgutinformationen, die beim Einliefern bzw. Erfassen des Stückguts erhalten werden, bei der Zuordnung des Stückguts zu einer Stückgutklasse verwendet werden. Beispielsweise kann auf diese Art und Weise das Gewicht eines Poststücks, das beim Aufgeben gemessen wurde, als Stückgutinformation gespeichert werden. Insbesondere wenn eine Lieferung von Stückgütern angekündigt wird und Informationen über die Stückgüter zur Verfügung stehen können bereits vor dem Handhaben von Stückgütern, Informationen über die Stückgüter erlangt werden. Dies kann die Klassifizierung und den Handhabungsprozess erleichtern.

Vorzugsweise umfasst das Verfahren ferner den Schritt: Ergänzen von Stückgutklassen zu der Datenbank, insbesondere nach einem Handhaben des Stückguts. Beispielsweise kann ein bei einem nicht erfolgreichen Handhaben eines Stückguts, basierend auf den Stückgutinformationen eine neue Stückgutklasse erstellt werden. Die neue Stückgutklasse kann dann indikativ für Manipulationsparameter sein, die ein Handhaben eines zuvor gehandhabten Stückguts in der Zukunft ohne Fehler zulassen sollen. Das ist insbesondere vorteilhaft, falls Stückgutinformationen nicht zu bereits existierenden Stückgutklassen passen. Dadurch ist ein dynamisches Anpassen der Datenbank möglich. Insbesondere kann die Datenbank auf diese Weise manuell oder automatisch angepasst und so verbessert werden. Das Anpassen der Datenbank, insbesondere der multidimensionalen Datenbank, kann durch maschinelles Lernen oder eine künstliche Intelligenz erfolgen.

Vorzugsweise werden Stückgutinformationen aus einer späteren Identifikation des Stückguts erlangt. Vorzugsweise können die Stückgüter mittels einer Waage und/oder mittels Empfänger- und/oder Absenderinformationen identifiziert werden. Damit kann auch nach einem Handhaben der Stückgüter Informationen über das gehandhabte Stückgut erlangt werden und in der Datenbank gespeichert werden. Dadurch kann die Qualität der Informationen, die in der Datenbank gespeichert sind, erhöht werden. Ferner kann eine Optimierung der Manipulationsparameter durchgeführt werden, um eine Handhabung noch effizienter zu machen.

Vorzugsweise wird im weiteren Verlauf einer Handhabung des Stückguts das Stückgut getrackt und so zumindest eine Stückgutinformation erlangt, insbesondere Masse, Abmessungen und/oder Verhalten bei einer Handhabung des Stückguts. Beispielweise können diese Stückgutinformationen während einer Handhabung ermittelt und für den weiteren Verlauf der Handhabung verwendet werden. So ist es vorteilhaft, wenn eine Zuordnung zwischen Stückgutinformationen und Stückgutklassen basierend auf in der Vergangenheit erlangten Daten realisiert wird, insbesondere während dem Betrieb einer Anlage. Die Stückgüter können beispielsweise durch Radio frequency identification (RFID) getrackt werden. Ferner ist es denkbar ein Stückgut mittels optischer Verfahren bei einer nachfolgenden Handhabung zu tracken. Somit kann bestimmt werden, wie sich ein bestimmtes Stückgut in anderen Handhabungsvorrichtungen verhält. Damit können weitere Rückschlüsse auf die Poststückinformationen gemacht werden. So kann beispielsweise getrackt werden wie das Poststück sich verhält, wenn es bei einer nachfolgenden High Speed Injektion auf einen Sorter aufgeschossen wird. Durch solche Informationen kann eine zukünftige Handhabung des Poststücks verbessert werden, da beispielsweise erkannt werden kann wie schnell ein Poststück beschleunigt werden kann. Ferner können nachfolgende Handhabungsvorrichtungen aufgrund der Art der Handhabung Messgrößen des Poststücks erfassen und der Datenbank zur Verfügung stellen.

Vorzugsweise werden die Stückgutinformationen basierend auf einem Bild des Stückguts bestimmt. Mit anderen Worten kann es ausreichen, ein einzelnes Bild des Stückguts zu erlangen, um das Stückgut einer Stückgutklasse zuzuordnen. Die optische Aufnahme eines Bildes kann besonders einfach erfolgen. Ferner kann ein Bild auch von einer Vorrichtung aufgenommen werden, die von der Handhabungsvorrichtung beabstandet ist. Damit kann die Erlangung des Bildes und die Handhabungsvorrichtung unabhängig voneinander sein. Damit kann das Bilderfassungssystem auch nachträglich vorgesehen werden. Ferner kann damit das obige Verfahren auch bei existierende Anlagen vorgesehen werden. Beispielsweise können Bilder von einem Stückgut vor einer Handhabung und nach einer Handhabung aufgenommen werden. Anschließend kann ein Stückgutinformation basierend auf einem Vergleich der Bilder des Stückguts ermittelt werden. Dabei kann insbesondere der äußere Zustand des Stückguts vor und nach der Handhabung berücksichtigt werden.

Vorzugsweise kann bei dem Bestimmen der Stückgutinformationen auf Basis eines Bildes ein lernender Algorithmus verwendet wird. Der lernende Algorithmus kann genutzt werden um Bildinformationen aus dem Bild zu extrahieren. Der Algorithmus kann mit einer Vielzahl von Bildern von Stückgütern als Eingangsdaten und mit Angaben welche Art von Stückgut auf dem Bild dargestellt ist als Ausgangsdaten trainiert worden sein. Somit kann der Algorithmus in Echtzeit erkennen was auf dem jeweiligen Bild dargestellt ist.

Vorzugsweise wird eine Genauigkeit der bestimmten Stückgutinformationen auf Basis einer erfolgreichen Handhabung des Stückguts bestimmt. So kann definiert werden, dass die verwendeten Manipulationsparameter für eine Handhabung geeignet sind. In einem nächsten Schritt können die Manipulationsparameter angepasst werden und geprüft werden, ob die Handhabung immer noch erfolgreich ist. So kann durch iteratives herantasten die optimalen Manipulationsparameter für jede Stückgutklasse erlangt werden. Damit kann ein Handhabung von Stückgütern immer weiter optimiert werden (z.B. für jede Stückgutklasse).

Vorzugsweise umfassen die Stückgutinformationen eine Wahrscheinlichkeit für eine erfolgreiche Handhabung des Stückguts mit den zugeordneten Manipulationsparametern. So können fehlgeschlagene Handhabungen berücksichtigt werden. Des Weiteren können bei einer Abweichung einer zu erwartenden Zahl fehlgeschlagener Handhabungen von einer tatsächlichen Anzahl fehlgeschlagener Handhabungen die Manipulationsparameter angepasst werden. Alternativ oder zusätzlich kann bei dem Bestimmen des zumindest einen Manipulationsparameters eine Erfolgswahrscheinlichkeit zugrunde gelegt werden bzw. bestimmt werden.

Vorzugsweise wird die Zuordnung von Stückgutinformation und Stückgutklasse und/oder die Zuordnung von Stückgutklasse und Manipulationsparameter, insbesondere regelmäßig, aktualisiert. Dabei können insbesondere Manipulationsparameter auf vorbestimmte Werte gesetzt bzw. geändert werden und ein Handhabungserfolg des zumindest einen Stückguts bestimmt werden. Dabei kann eine Explorationsphase vorgesehen sein, in der verschiedene Manipulationsparameter zunächst getestet werden. Beispielsweise ist es vorteilhaft, wenn Manipulationsparameter in bestimmten Inkrementen angepasst werden und ein Handhabungserfolg des zumindest einen Stückguts bestimmt wird. Die Manipulationsparameter können basierend auf der Explorationsphase und/oder einem Handhabungserfolg angepasst und in der Datenbank abgespeichert werden. Zusätzlich oder alternativ kann eine Genauigkeit einer Handhabung des Stückguts mit den zugeordneten Manipulationsparametern bestimmt werden.

Es ist vorteilhaft, wenn eine Anzahl von Stückgutklassen so festgelegt wird, dass alle zu handhabenden Stückgüter erfolgreich gehandhabt werden können. Dadurch kann eine erfolgreiche Handhabung sichergestellt werden, wenn beispielsweise ein Stückgut nicht zweifelsfrei einer Stückgutklasse zugeordnet werden kann.

Vorzugsweise ist wird eine Spanne für den zumindest einen Manipulationsparameter bestimmt, bei der mit einer erfolgreichen Manipulation des Stückguts gerechnet wird. Beispielsweise kann die Spanne eine Geschwindigkeitsspanne umfassen, um ein Stückgut in einer bestimmten Zeit zu einer gewünschten Position zu bewegen. Wobei dem zumindest einem Manipulationsparameter ein Qualitätsparameter zugeordnet wird, so dass der Manipulationsparameter gewichtet werden kann, um den größtmöglichen Handhabungserfolg zu erzielen. Dabei kann auch Erfolg und Misserfolg der Handhabung sowie die Wahrscheinlichkeit, dass ein Stückgut bei der Handhabung beschädigt, wird berücksichtigt werden.

Gemäß einem weiteren Aspekt der vorliegenden Erfindung wird ein System zum Handhaben von zumindest einem Stückgut bereitgestellt, wobei das System umfasst: zumindest eine Transportvorrichtung zum Handhaben von Stückgütern, und eine Sensoreinheit, die dazu ausgestaltet ist, das Verfahren gemäß einem der vorhergehenden Ansprüche auszuführen.

Ein weiterer Aspekt der vorliegenden Erfindung betrifft ein System umfassend zumindest eine Transportvorrichtung zur Handhabung von Stückgütern, wobei das System dazu konfiguriert ist, das Verfahren nach einem der vorhergehenden Ansprüche auszuführen.

Das System umfasst vorzugsweise einen optischen Sensor, insbesondere eine Kamera. Dadurch können optisch erkennbare Eigenschaften des Stückguts, wie Oberflächenbeschaffenheit, Briefmarken und Logos auf, sowie Größe, Volumen und Gewicht erkannt bzw. ermittelt und daraus Stückgutinformationen hergeleitet werden. Alternativ oder zusätzlich kann das System einen Lasersensor umfassen, insbesondere ein Laserraster.

Der Begriff Transportvorrichtung ist breit zu verstehen. Darunter kann insbesondere eine Vorrichtung verstanden werden, die ein Stückgut aktiv manipuliert. Das bedeutet beispielsweise, dass die Transportvorrichtung das Stückgut mit einer Kraft beaufschlagt bzw. bewegt. Eine Transporteinrichtung kann beispielsweise ein Förderband, ein Vakuumsauggreifer oder ähnliches sein.

Das System kann insbesondere einen Quergurtsortierer als Transportvorrichtung umfassen. Der Quergurtsortierer umfasst mehrere Quergurtelemente, die nacheinander angeordnet sind und Stückgüter in eine Längsrichtung bzw. Transportrichtung bewegen. Die Quergurtelemente umfassen orthogonal zur Querrichtung jeweils einen Laufgurt auf. Der Laufgurt ermöglicht es, Stückgüter von dem Quergurtelement auszuschleusen. Als Manipulationsparameter kann beispielsweise die Geschwindigkeit der Quergurte oder der Laufgurte je nach Stückgutklasse eines Stückguts angepasst werden, um dieses erfolgreich auszuschleusen. Der Quergurtsortierer ist insbesondere für leichte und unförmige Pakete geeignet. Zusätzlich kann der Quergurtsortierer eine Vorrichtung umfassen, die mittels Druckluftstöße fehlplatzierte Stückgüter an eine Endstelle befördert. Bei diesem kann beispielsweise der Druck und die Dauer der Druckluftstöße angepasst werden.

Das System kann ferner insbesondere einen Singulator als Transportvorrichtung umfassen. Der Singulator ist dazu vorgesehen einen Volumenstrom an Stückgütern in einen Strom einzelner Stückgüter umzuwandeln. Der Singulator umfasst beispielsweise einen Abschnitt mit schmalen Förderbändern, die in einer Matrix in Laufrichtung angeordnet sind und die einzeln steuerbar sind. Die einzelnen Förderbänder können je nach Größe des Stückguts bzw. der Stückgutklasse aktiviert und die Geschwindigkeit gesteuert werden, um die Stückgüter in Laufrichtung voneinander versetzt anzuordnen. An diesen Abschnitt ist in Laufrichtung ferner eine Ausrichteinheit angeordnet, die die Stückgüter in einer Reihe ausrichtet. Dazu umfasst der Ausrichter zur Laufrichtung im Winkel angeordnete Rollen, die die Stückgüter in Laufrichtung und in Querrichtung bewegen, so diese hintereinander angeordnet sind.

Das System kann einen Vakuum-Sauggreifer als Transportvorrichtung umfassen. Der Vakuum-Sauggreifer ist dazu geeignet, verschiedene Stückgüter mit unterschiedlichen Eigenschaften wie Größe, Form, Gewicht, Oberflächenbeschaffenheit etc. zu Greifen und von einer Ausgangsposition zu einer Endposition zu bewegen. Der Vakuumgreifer ist vorzugsweise in Betriebsrichtung nach dem Singulator angeordnet.

Das Greifen erfolgt durch einen Unterdruck. Der Druckunterschied wird dadurch gebildet, dass ein Vakuum zwischen dem Sauggreifer und dem Stückgut gebildet wird. Genauer gesagt wird sobald der Sauggreifer die Oberfläche des Stückguts berührt und die Oberfläche gegenüber der Umgebung abdichtet, ein Unterdruck erzeugt. Die Haltekraft ist abhängig von der Druckdifferenz zwischen Umgebungsdruck und dem Druck im Sauggreifer und von der Größe der Berührungsfläche zwischen dem Vakuum-Sauggreifer und dem Stückgut. Somit kann abhängig von der Stückgutklasse, der das Stückgut zugeordnet ist, ein passender Ansaugdruck als Manipulationsparameter gewählt werden. Als weiterer Manipulationsparameter kann in Abhängigkeit der der Stückgutklasse zugeordneten Form des Stückguts ein Greifpunkt bzw. ein Ansaugpunkt vorgegeben sein.

Das System kann eine oder mehrere Rollenzeilen als Transportvorrichtung umfassen. Den Rollenzeilen können beispielsweise Stückgüter auf ein Förderband einschleusen bzw. in verschiedene Stückgüterströme aufzuteilen. Es ist somit vorteilhaft, die Rollenzeilen in Betriebsrichtung nach dem Singulator anzuordnen. Genauer gesagt werden die Rollenzeilen vorteilhafterweise für die Aufteilung eines Stückgüterstroms nach dem Singulator verwendet. Ein automatisches Sensorsystem kann beispielsweise anhand eines Lichtgitters oder einer Kamera die genaue Position und Größe der Stückgüter ermitteln. Die Stückgüter können so den entsprechenden Stückgutklassen zugeordnet und mit einem entsprechenden Manipulationsparameter beschleunigt und/oder die Ausrichtung der Rollen eingestellt werden, um beispielsweise die Stückgüter einem Sortieranlagen-Träger zu zuführen.

Das System kann ein Gurtförderband als Transportvorrichtung umfassen. Gurtförderbänder sind vorteilhaft, um große Volumenströme von Stückgütern zu transportieren. Beispielsweise müssen Gurtförderer im System so ausgelegt sein, dass diese die unterschiedlichsten Transportlasten bei gleichzeitig hoher Verfügbarkeit und Zuverlässigkeit verarbeiten können. Gurtförderer können Stückgüter mit hoher Frequenz und kurzen Beschleunigungs- und Bremswegen präzise positionieren und sortieren. Abhängig von der Stückgutklasse, also der Eigenschaften der zu transportierenden Stückgüter, kann beispielsweise die Geschwindigkeit des Gurtförderband reguliert werden.

Gemäß einem weiteren Aspekt der vorliegenden Erfindung wird eine Verwendung des Systems gemäß der obigen Ausführungsform zum Handhaben von Stückgütern bereitgestellt.

Ein weiterer Aspekt der vorliegenden Erfindung betrifft eine Verwendung einer Transportvorrichtung, insbesondere einen Singulator, und/oder eines Greifers, insbesondere eines Vakuum-Sauggreifers in einem Verfahren nach einem der vorhergehenden Ausführungsformen.

Gemäß einem Aspekt der vorliegenden Erfindung wird ein Verfahren zum Handhaben von zumindest einem Stückgut bereitgestellt, welches ein Aufzeichnen von Stückgutinformationen umfasst. Bei den Stückgutinformationen kann es sich um erhebbare Parameter des Stückguts und/oder eines vorhergehenden Manipulationsversuchs des Stückguts handeln. Die Stückgutinformationen können insbesondere Stückguteigenschaften, ein Stückgutbild, Sensordaten während des Manipulationsversuchs und/oder ein Resultat des Manipulationsversuchs (z.B. Erfolg/Misserfolg, Dauer und/oder Sonstige Kosten, z.B. Stromverbrauch oder Abnutzung) umfassen. Basierend auf den Stückgutinformationen kann eine Datenbank angelegt werden. Die Datenbank kann dabei indikativ dafür sein, wie welches Stückguts gehandhabt werden muss, um ein bestimmtes Ergebnis zu erhalten.

Ferner kann das Verfahren eine Refaktorisierung der Datenbank umfassen, um eine Anwendung der Datenbank in ihrer Effizienz zu steigern. Vorzugsweise kann dazu mehrere Einträge nach gleichen erfolgreichen Manipulationsparametern geclustert werden. Eine solche Clusterung kann dann als Stückgutklasse bezeichnet werden. Mit anderen Worten können verschiedene Manipulationsparameter (welche z.B. in der Vergangenheit ein bestimmtes Ergebnis geliefert haben) einer Stückgutklasse zugeordnet werden. Zusätzlich oder alternativ können Einträgen nach ähnlichen Stückguteigenschaften (z.B. Sendungseigenschaften) geclustert werden. Mit anderen Worten können verschiedene Stückguteigenschaften (welche z.B. ähnliche Manipulationsparameter verlangen) einer Stückgutklasse zugeordnet werden. Basierend darauf kann eine Datenbank realisiert sein, die einer Funktion ähnelt, die Sendungseigenschaften aufnimmt und Manipulationsparameter ausgibt.

Ferner kann das Verfahren eine fortlaufende Optimierung der Datenbank umfassen. Mit anderen Worten kann eine fortwährende Optimierung der abgeleiteten Datenstruktur realisiert sein, wenn neue Datenpunkte aufgenommen werden. Somit kann das Verfahren auch vorteilhaft angewendet werden, wenn sich ein Stückgutspektrum über die Zeit ändert.

Ferner kann das Verfahren ein Bestimmen einer Erfolgswahrscheinlichkeit für jeden vorgeschlagenen Manipulationsparameter bestimmen. Ziel kann es dabei vorzugsweise sein, die Erfolgswahrscheinlichkeit für jeden vorgeschlagenen Manipulationsparameter möglichst hoch zu bekommen. Damit kann eine fehlerfreie Manipulation des Stückguts mit einer hohen Wahrscheinlichkeit realisiert sein.

Vorzugsweise umfasst das Verfahren eine Exploration, bei der unbekannte Stückgüter erkannt werden und mit vorbestimmten Manipulationsparametern gehandhabt werden. Mit anderen Worten kann es sich bei unbekannten Stückgüter um Stückgüter handeln, für die es keine oder nur sehr wenige Erfahrungen aus vorhergehenden Manipulationen gibt. In einem solchen kann die Datenbank kein zufriedenstellenden Vorschlag zur Manipulation ausgeben. Dies kann daran liegen, dass eine Manipulation mit dieser Art von Stückgut noch nie ausprobiert wurde. In einem solchen Fall können vorbestimmte Manipulationsparameter verwendet werden, die sicher stellen, dass das Stückgut sicher manipuliert wird. Beispielsweise kann das Stückgut besonders langsam gehandhabt werden, um zu verhindern, dass ein Fehler bei der Manipulation auftritt. Die Manipulation während der Exploration kann im Detail überwacht werden, um die angewendeten Manipulationsparameter zu prüfen. Die Manipulationsparameter können dann schrittweise immer weiter angepasst werden, um die optimalen Manipulationsparameter für diese Art von Stückgut und/oder Stückgutklasse zu finden. Ist der optimale Manipulationsparameter gefunden, kann die Exploration beendet werden.

Somit kann ein multidimensionaler Raum geschaffen werden, der ein Vielzahl von möglicher Stückgüter und Manipulationsparameter umfasst. Mit anderen Worten kann der multidimensionale Raum für bestimmte Stückgutinformationen erforderliche Manipulationsparameter ausgeben. Eine Historie (z.B. eine Information einer vergangenen Handhabung) muss aber nicht zwingend in einer multidimensionalen Datenbank abgelegt sein.

Einzelne Merkmale oder Ausführungsformen können mit anderen Merkmalen oder anderen Ausführungsformen kombiniert werden und so neue Ausführungsformen bilden. Die Vorteile und Ausgestaltungen, die in Verbindung mit den Merkmalen oder Ausführungsformen genannt sind gelten dann analog auch für die neuen Ausführungsformen. Vorteile und Ausgestaltungen, die in Zusammenhang mit dem Verfahren genannt sind, gelten analog auch für die Vorrichtung und anders herum.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- **Figur 1:**: Eine schematische Ansicht einer Ausführungsform des erfindungsgemäßen Verfahrens.
- **Figur 2**:: Eine schematische Ansicht eines Systems.
- **Figur 3:**: Eine schematische Darstellung einer multidimensionalen Datenbank.

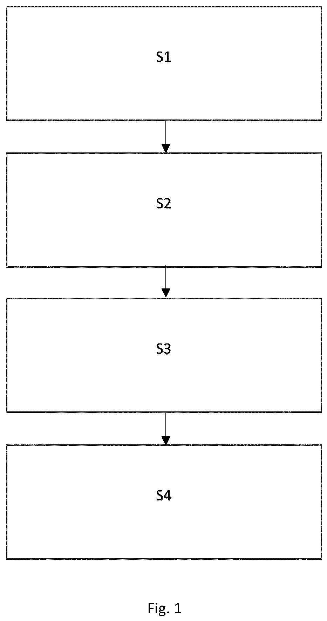

**Figur 1** zeigt eine schematische Darstellung einer Ausführungsform eines Verfahrens zum Handhaben von zumindest einem Stückgut. In einem ersten Schritt S1 erfolgt das Bestimmen oder Erlangen von zumindest einer Stückgutinformation SI des zumindest einen Stückguts. Dies kann beispielsweise durch eine Sensoreinheit 12 erfolgen. Die Sensoreinheit 12 kann beispielsweise ein optischer Sensor, insbesondere eine Kamera, sein. Alternativ kann die Stückgutinformation SI bereits zu einem früheren Zeitpunkt erfasst und gespeichert worden sein, so dass diese nur noch von aus einer Datenbank abgerufen werden muss. Vorzugsweise werden mindestens drei Stückgutinformationen SI erfasst, die vorzugsweise in einer multidimensionalen Datenbank gespeichert werden.

In einem zweiten Schritt S2 erfolgt das Zuordnen des zumindest einen Stückguts zu einer Stückgutklasse SK, wobei die Stückgutklasse SK aus einer Datenbank DB basierend auf der Stückgutinformation SI erlangt wird. Mit anderen Worten erfolgt die Zuordnung eines Stückguts in Abhängigkeit der Stückgutinformation SI. Die Datenbank kann eine multidimensionale Datenbank sein bzw. zumindest eine multidimensionale Datenbank umfassen. Insbesondere definieren die Arten der Stückgutinformationen SI die Anzahl der Dimensionen der multidimensionalen Datenbank.

In einem dritten Schritt S3 erfolgt das Bestimmen von zumindest einem Manipulationsparameter für das zumindest eine Stückgut basierend auf der Stückgutklasse SK. Das bedeutet, dass einer Stückgutklasse SK zumindest ein Manipulationsparameter zugeordnet ist.

Die Manipulationsparameter können auch als Ausgang der Datenbank DB bezeichnet werden. Ein Manipulationsparameter kann beispielsweise ein Sollwert für eine Steuerung sein, die dazu konfiguriert ist, ein Stückgut zu handhaben. Beispielsweise kann der Sollwert einen Ansaugdruck für ein Vakuumsauggreifer umfassen. Zusätzlich kann der Sollwert eine Geschwindigkeit und/oder Beschleunigung für einen Roboterarm des Vakuumsauggreifers umfassen. Beispielsweise kann für eine Stückgutklasse, in der besonders schwere und/oder unhandliche Stückgüter umfasst sind, eine geringe Geschwindigkeit und ein hoher Ansaugdruck vorgesehen sein, um ein Stückgut zu handhaben. Für besonders leichte Stückgüter kann beispielsweise ein geringerer Ansaugdruck und eine höhere Geschwindigkeit vorgehsehen sein.

In einem vierten Schritt S4 erfolgt das Handhaben des Stückguts basierend auf dem zumindest einen Manipulationsparameter. Mit anderen Worten werden die für eine Stückgutklasse vorgesehenen bzw. abgespeicherten Manipulationsparameter abgerufen und verwendet. Die Manipulationsparameter können an Steuereinheiten bzw. Regeleinheiten übermittelt werden, um die Vorrichtungen, die die Stückgüter handhaben entsprechend der Stückgutklasse zu steuern.

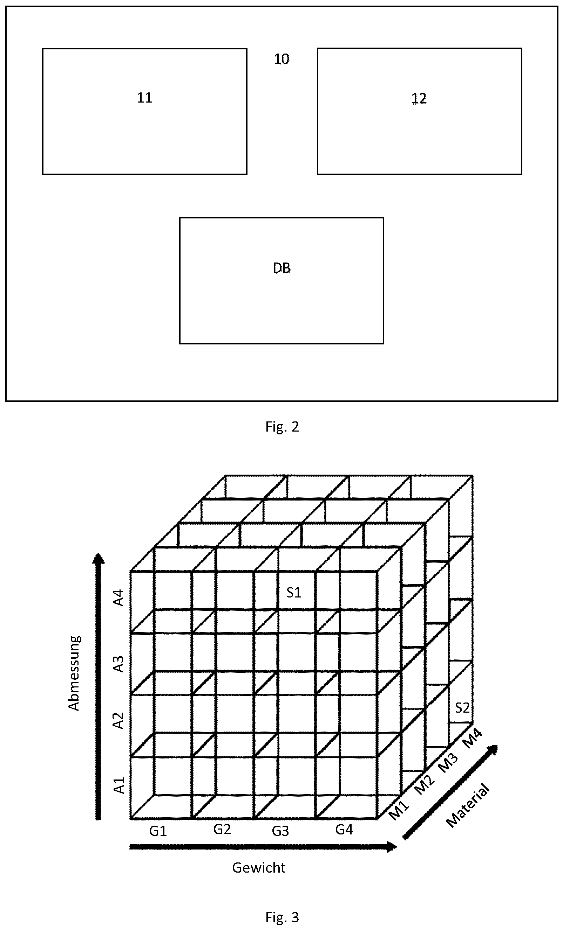

**Figur 2** zeigt ein System 10, das zum Ausführen des genannten Verfahrens vorgesehen ist. Das System 10 umfasst zumindest eine Transportvorrichtung 11 und eine Sensoreinheit 12. Das System 10 umfasst ferner die Datenbank DB.

Die Transportvorrichtung 11 ist dazu konfiguriert Stückgüter zu manipulieren bzw. zu bewegen. Es ist denkbar, dass das System 10 mehrere verschiedene Transportvorrichtungen 11 umfasst, die miteinander verbunden bzw. gekoppelt sind, um die Stückgüter zu handhaben, insbesondere zu transportieren und/oder zu Sortieren.

Die Sensoreinheit 12 kann in die Transportvorrichtung 11 integriert sein. Die Sensoreinheit 12 ist dazu konfiguriert, Stückgutinformationen SI der Stückgüter zu erfassen. Dazu kann das System 10 mehrere verschiedene Sensoreinheiten 12 umfassen. Die Sensoreinheit 12 kann insbesondere einen optischen Sensor umfassen. Insbesondere können Lasersensoren verwendet werden. Diese sind vorteilhaft, um Abmessungen eines Stückguts zu ermitteln. Ferner können Kamerasensoren eingesetzt werden. Diese sind vorteilhaft, um optische Eigenschaften der Stückgüter zu erfassen. Eine Waage zur Ermittlung des Gewichts der Stückgüter kann ebenfalls vorgesehen sein.

Die Datenbank DB kann eine multidimensionale Datenbank sein. Die Datenbank DB ist mit der Sensoreinheit 12 verbunden. Die von der Sensoreinheit 12 ermittelten Stückgutinformationen SI werden an die Datenbank DB übermittelt. In der Datenbank DB werden die Stückgüter anhand ihrer Stückgutinformationen SI Stückgutklassen SK zugeordnet. Daraus ergeben sich für die einzelnen Stückgüter Manipulationsparameter, die an die Transportvorrichtung 11 gesendet werden, um die Stückgüter zu Handhaben.

**Figur 3** zeigt schematisch eine multidimensionale Datenbank. Die gezeigte multidimensionale Datenbank umfasst drei Dimensionen und ist als ein Würfel dargestellt.

Eine Dimension Y umfasst Abmessungen eines Stückguts, eine Dimension X umfasst ein Gewicht eines Stückguts und eine Dimension Z umfasst ein Material eines Stückguts.

Dimension Y umfasst mehrere Abmessungen oder mehrere Spannen bzw. Bereiche von Abmessungen des Stückguts wie Höhe, Breite, Tiefe, Radius und/oder Winkel. Um diese zu erhalten, kann das Stückgut durch einen Lasersensor gescannt bzw. abgetastet werden. Die Abmessungen dienen vorzugsweise dazu, die Form und das Volumen des Stückguts erfassen zu können.

Dimension X umfasst das Gewicht, das beispielsweise durch wiegen des Stückguts erfasst wurde. Diese Stückgutinformation erlaubt es, den notwendigen Kraftaufwand, um ein Stückgut in Bewegung setzen zu können, ermitteln zu können. Dadurch kann beispielsweise eine notwendige Bestromung eines Motors vorbestimmt und als Manipulationsparameter ausgegeben werden. Ferner kann durch das Gewicht in Kombination mit den Abmessungen ein Schwerpunkt des Stückguts berechnet werden. Dieser kann hilfreich sein, um Koordinaten einer Position zum Ansetzen eines Greifers, insbesondere eines Vakuum-Sauggreifers, am Stückgut zu ermitteln.

Dimension Z betrifft das Material des Stückguts. Dimension Z beinhaltet die Information, ob das Stückgut aus einem harten bzw. unnachgiebigen Material oder einem weichen nachgiebigen Material besteht. Ferner kann in der Dimension Z die Stückgutinformation umfasst sein, ob das Stückgut eine raue oder glatte Oberfläche aufweist. Diese Informationen können bei der Handhabung des Stückguts mit einem Vakuum-Sauggreifer vorteilhaft sein. So kann der Ansaugdruck über einen geeigneten Manipulationsparameter angepasst werden.

Ein erstes Stückgut S1 weist beispielsweise die Stückgutinformationen A4, G2 und M1 auf. Das Stückgut S1 der entsprechenden Stückgutklasse SK zugeordnet. Die Stückgutklassen sind durch die Teilwürfel dargestellt. Ist das erste Stückgut S1 der Stückgutklasse zugeordnet, kann der für diese Stückgutklasse SK festgelegte Manipulationsparameter abgerufen werden oder die festgelegten Manipulationsparameter abgerufen werden.

Ein zweites Stückgut S2 weist die Stückgutinformationen A1, G4 und M4 auf. Das zweite Stückgut S2 ist einer anderen Stückgutklasse SK als das erste Stückgut S1 zugeordnet, da die Stückgutinformationen SI Abweichungen voneinander aufweisen. Dem zweiten Stückgut S2 sind folglich andere Manipulationsparameter zugeordnet als dem ersten Stückgut S1.

Es ist denkbar, dass je nach Art der Vorrichtung, die die Stückgüter handhaben, Stückgutinformationen unterschiedlich gewichtet werden. Beispielsweise kann das Gewicht eines Stückguts bei der Handhabung mit einem Vakuum-Sauggreifer wichtiger sein als beim Transport eines Stückguts durch einen Singulator oder ein Förderband.

Zusätzlich zu den drei genannten Dimensionen der multidimensionalen Datenbank ist es denkbar, dass eine vierte Dimension existiert. Eine vierte Dimension kann beispielsweise Informationen bezüglich des Absenders und/oder Empfängers, beispielsweise eine Postleitzahl bei Paketstücken, sein. Die multidimensionale Datenbank kann beliebig viele Dimensionen umfassen.

Es ist ferner denkbar, dass mehrere multidimensionale Datenbanken miteinander verbunden sind. Dadurch kann eine Vielzahl von Stückgutinformationen schnell und effizient verarbeitet werden.

Alternativ oder zusätzlich, kann die durch die ermittelten Stückgutinformationen SI ermittelte Stückgutklasse SK eine eigene Dimension einer weiteren multidimensionalen Datenbank bilden. Dadurch können die Stückgüter weiter untergliedert und verarbeitet werden.

Andere Ausführungsformen der vorliegenden Erfindung sind möglich und können von Fachpersonen bei der Anwendung des beanspruchten Gegenstands aus dem Studium der Figuren, der Offenbarung und der beigefügten Ansprüche verstanden und ausgeführt werden. Insbesondere können die jeweiligen Teile/Funktionen des jeweiligen oben beschriebenen Ausführungsform auch miteinander kombiniert werden. Ferner können verschiedene Schritte des Verfahrens in einer anderen Reihenfolge ausgeführt werden, als hier offenbart. In den Ansprüchen schließt das Wort "umfassend" andere Elemente oder Schritte nicht aus und der unbestimmte Artikel "ein" oder "eine" schließt eine Mehrzahl nicht aus. Die bloße Tatsache, dass bestimmte Maßnahmen in voneinander abhängigen Ansprüchen genannt werden, bedeutet nicht, dass eine Kombination dieser Maßnahmen nicht vorteilhaft sein kann. Etwaige Bezugszeichen in den Ansprüchen sollten nicht als Einschränkung des Umfangs der Ansprüche ausgelegt werden.

### Bezuqszeichenliste:

- SI: Stückgutinformation
- SK: Stückgutklasse
- DB: Datenbank
- 10: System
- 11: Transportvorrichtung
- 12: Sensoreinheit

## Patentansprüche

1. Verfahren zum Handhaben von zumindest einem Stückgut, umfassend:
- Bestimmen oder Erlangen von zumindest einer Stückgutinformation (SI) des zumindest einen Stückguts,
- Zuordnen des zumindest einen Stückguts zu einer Stückgutklasse (SK), wobei die Stückgutklasse (SK) aus einer Datenbank (DB) basierend auf der Stückgutinformation (SI) erlangt wird,
- Bestimmen von zumindest einem Manipulationsparameter für das zumindest eine Stückgut basierend auf der Stückgutklasse (SK),
- Handhaben des Stückguts basierend auf dem zumindest einen Manipulationsparameter.

2. Verfahren gemäß Anspruch 1,
wobei die Datenbank (DB) eine multidimensionale Datenbank (DB) ist, und wobei das Zuordnen des zumindest einen Stückguts zu der Stückgutklasse (SK) basierend auf zumindest zwei Stückgutinformationen (SI) durchgeführt wird.

3. Verfahren gemäß Anspruch 1 oder 2, wobei bei dem Zuordnen mehrere Stückgüter mit gleichen oder ähnlichen Stückgutinformationen (SI) derselben Stückgutklasse (SK) zugeordnet werden.

4. Verfahren gemäß einem der vorhergehenden Ansprüche, wobei Manipulationsparameter für alle Stückgüter einer Stückgutklasse (SK) identisch sind.

5. Verfahren gemäß einem der vorhergehenden Ansprüche, wobei die Stückgutinformation (SI) eine Verformung des Stückguts bei einem Handhaben des Stückguts umfasst.

6. Verfahren gemäß einem der vorhergehenden Ansprüche, wobei der Schritt bezüglich des Bestimmens oder Erlangens von zumindest einer Stückgutinformation (SI) des zumindest einen Stückguts zeitlich vor dem Schritt bezüglich des Handhabens des Stückguts basierend auf dem zumindest einen Manipulationsparameter erfolgt.

7. Verfahren gemäß einem der vorhergehenden Ansprüche, wobei die Stückgutinformation (SI) zumindest einen Parameter über eine vergangene Manipulation und/oder einen vergangenen Manipulationsversuch desselben Stückguts oder eines ähnlichen Stückguts, insbesondere eines Poststücks, umfasst.

8. Verfahren gemäß einem der vorhergehenden Ansprüche, wobei die Stückgutinformation (SI) Erfolg eines vorangegangen Manipulationsversuchs, insbesondere durch Abgleich von Erwartung und tatsächlichem Ergebnis, umfasst.

9. Verfahren gemäß einem der vorhergehenden Ansprüche, ferner umfassend Ergänzen von Stückgutklassen (SK) zu der Datenbank (DB), insbesondere nach einem Handhaben des Stückguts.

10. Verfahren gemäß einem der vorhergehenden Ansprüche, wobei Stückgutinformationen (SI) aus einer späteren Identifikation des Stückguts erlangt werden.

11. Verfahren gemäß einem der vorhergehenden Ansprüche, wobei im weiteren Verlauf einer Handhabung des Stückguts das Stückgut getrackt und so zumindest eine Stückgutinformation (SI) erlangt wird, insbesondere Masse, Abmessungen und/oder Verhalten bei einer Handhabung des Stückguts.

12. Verfahren gemäß einem der vorhergehenden Ansprüche, wobei die Stückgutinformationen (SI) basierend auf einem Bild des Stückguts bestimmt werden.

13. Verfahren gemäß einem der vorhergehenden Ansprüche, wobei die Stückgutinformationen (SI) eine Wahrscheinlichkeit für eine erfolgreiche Handhabung des Stückguts mit den zugeordneten Manipulationsparametern umfassen.

14. System (10) zum Handhaben von zumindest einem Stückgut, umfassend:
zumindest eine Transportvorrichtung (11) zum Handhaben von Stückgütern, und
eine Sensoreinheit (12), die dazu ausgestaltet ist, das Verfahren gemäß einem der vorhergehenden Ansprüche auszuführen.

15. Verwendung des Systems (10) gemäß Anspruch 14 zum Handhaben von Stückgütern.
